# EUROPEAN PATENT APPLICATION

(11) **EP 4 385 733 A2**
(43) Date of publication of application: **19.06.2024**
(21) Application number: 23211105.4
(22) Date of filing: 21.11.2023
(51) Int. Cl.: B32B 39/00, B32B 38/18, B32B 37/02

(54) **PLANT FOR THE PRODUCTION OF MULTILAYER PANELS AND RELATIVE METHOD PRODUCTION OF MULTILAYER PANELS**

(30) Priority: 22.11.2022 IT 202200023997
(71) Applicant: Elmag S.P.A., 20852 Villasanta (MB) (IT)
(72) Inventor: COLOMBO, Alice, 20852 Villasanta (MB) (IT)
(74) Representative: Tiburzi, Andrea

(57) **Abstract**

The present invention concerns a plant (I) for the production of multilayer panels comprising: an operating station (3) capable of applying an adhesive material on at least a surface of a first layer (10) and/or at least one surface of a second layer (11), to be combined with said first layer (10); a support conveyor (55), arranged downstream of said operating station (3), intended to receive said first layer (10); an overlapping station (5) arranged adjacent to said support conveyor (55) and intended to receive said second layer (11) from said operating station (3), wherein said overlapping station (5) is configured to overlap said second layer (11) on said first layer (10), so that said at least one surface of said first layer (10) is in contact with said at least one surface of said second layer (11) to form a multilayer panel.

The present invention also concerns an overlapping station (5) and a method of producing multilayer panels.

## Description

The present invention concerns a plant for the production of multilayer panels and relative method of production of multilayer panels.

### Field of invention

More in detail, the invention concerns a plant of the aforementioned type, designed and realized in particular to allow the automation of the production and creation of multilayer panels.

In the following, the description will be aimed at the production of multilayer panels typically made of wood and cardboard, but it is clear that the same should not be considered limited to this specific use.

### Prior art

As is well known, there are currently multilayer panels that include a wooden base layer, a reinforcement layer, and an external covering layer.

Typically, these multilayer panels are produced so that the base layer and the covering layer, both generally made of wood, face each other and that one or more reinforcement layers are interposed between them to form a sandwich.

As is known, the reinforcement layer can comprise a variable number of internal layers, based on the application, made up of sheets of corrugated cardboard or corrugated paper, wooden sheets, or sheets of composite material.

As is known, there are methods for applying two or more layers to one layer through a multilayer coating and gluing process. Coating processes are mainly used for the application of a decorative or functional sheet on a rigid layer.

Furthermore, there are methods for the production of multilayer panels, in which an acrylic, unsaturated polyester, urea, melamine or phenolic resin is applied to the panel substrates, and in which the polymerization of the composition of the wood panel and the corrugated paper is carried out coating, followed by hot pressing.

As is well known, multilayer panels are currently obtained through manual or semi-manual processes, in which both the resin application step on the surfaces of the layers and the panel composition step are carried out manually.

To date, the operator is required to first introduce a base and one or more reinforcing layers into a production line for resin application and then to extract the reinforcing layer, which can typically be paper or corrugated cardboard, to combine it with the base it is joined to.

As is well known, the operations of the production line and the operator can be repeated cyclically, where a greater number of internal reinforcement layers is required.

It seems clear that this procedure is expensive in terms of time and for the operator, whose presence is constantly required and for whom at least one insertion intervention of the material is foreseen, an intervention to combine the base of the panel with the reinforcement layers of paper or cardboard, any reinsertion of the semi-finished panel and removal of the complete product.

### Purpose of the invention

In light of the above, it is therefore the aim of the present invention to propose a plant capable of automating the production process of multilayer panels.

Another purpose of the invention is to provide an automatic overturning plant for overturning a layer corresponding to another layer of the multilayer panel to be produced.

Furthermore, the aim of the present invention is to provide a plant for the production of multilayer panels capable of reducing the working times and interventions of an operator.

A further purpose of the present invention is to provide the tools necessary for carrying out the method and the apparatus which carry out this method.

### Object of the invention

These and other results are obtained according to the invention with a plant for the automatic production of multilayer panels.

It is, therefore, specific object of the present invention a plant for the production of multilayer panels comprising an operating station, a support station and an overlapping station. The operating station of the plant is capable of applying an adhesive material on at least one surface of a first layer and/or at least one surface of a second layer, to be combined with said first layer. The support conveyor is arranged downstream of said operating station, intended to receive said first layer. The overlapping station is arranged adjacent to said support conveyor and intended to receive said second layer from said operating station, wherein said overlapping station is configured to overlap said second layer onto said first layer, such that said at least one loading surface said first layer is in contact with said at least one surface of said second layer to form a multilayer panel.

The first and second layers are in contact with each other to form a multi-layer panel preferably with the second layer lying on the first layer.

In some embodiments, the overlapping station may include means for tilting the second layer onto the first layer, such as by a tilter, flipping the top and bottom surfaces of the second layer.

In some embodiments, the overlapping station may include means for pushing the second layer over the first, without the need to flip it. Therefore, the top and bottom surfaces of the layer do not need to be flipped.

Preferred embodiments of the plant object of the present invention provide an overlapping station that includes an automatic tilter to overturn the second layer onto the first layer when the first layer is on the support conveyor. The tilter has at least one actuator to keep said second layer in correspondence with the first layer, for example, adjacent to the latter, and a support mechanism, configured to lift the second layer to a predetermined height and support it substantially parallel to said conveyor support.

Preferably, the support mechanism is configured to lift the second layer to a predetermined height before being flipped.

Since the first layer is also substantially parallel to the support conveyor, the first and second layers are parallel to each other before the overturning. Furthermore, given that the overturning is substantially 180°, the second layer is substantially parallel to the first layer even after the overturning.

The specific object of the present invention is also an overlapping station for a plant for the production of multilayer panels, which comprises an automatic tilter configured to overturn a second layer onto a first layer when the first layer is on a support conveyor, wherein the tilter comprises at least one actuator for maintaining the second layer in correspondence with the first layer and a support mechanism configured to lift the second layer to a predetermined height and support it substantially parallel to the transfer plant.

The object of the present invention is also a method of producing multilayer panels using a plant. The method comprises the following steps:
a. automatically loading a first and/or a second layer in an input position of said plant;
b. transporting said first layer and second layer from said input position to said operating station for applying an adhesive material;
c. applying an adhesive material on at least one surface of said first layer and/or on a surface of a second layer to be combined with said first layer;
d. transferring said second layer from said operating station to an overlapping station and said first layer from said operating station to a support conveyor adjacent to said overlapping station; and
e. overlapping said second layer on said first layer, in such a way that said at least one surface of said first layer is in contact with said at least one surface of said second layer to form a multilayer panel.

In some embodiments the first or second layer can be pre-loaded on the plant or can be loaded manually.

### Brief description of the drawings

The present invention will be now described, for illustrative but not limitative purposes, according to its preferred embodiments, with particular reference to the figures of the enclosed drawings, wherein:
figure 1 shows a schematic top view of a plant for the production of multilayer panels, object of the present invention;
figure 2 shows the plant for the production of multilayer panels according to figure 1, in which there are two layers to be machined for the production of multilayer panels; and
figure 3 shows the plant of figure 2, in which two substrates are located in an overlapping station, which is part of the plant.

### Detailed description

In the various figures the similar parts will be indicated with the same numerical references.

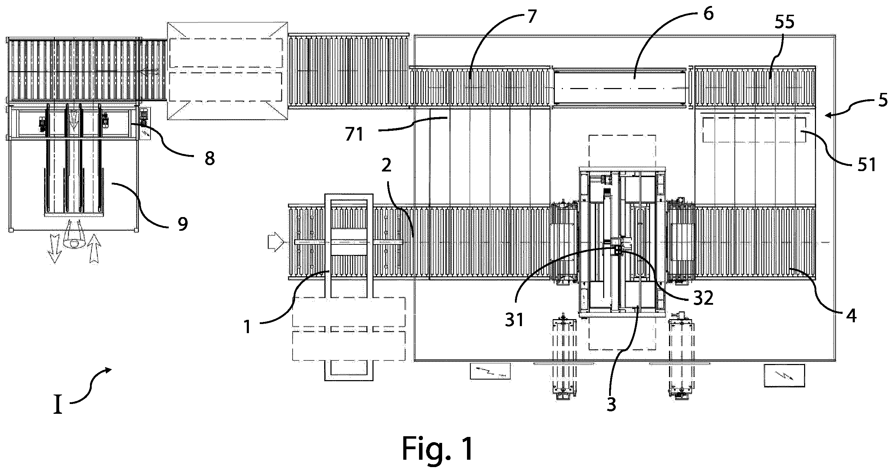

Referring to figure 1, a plant I is shown for the production of a multilayer panel, which generally comprises a loader 1 for loading a layer of the panel to be produced, an input conveyor 2, an operating station 3, a transfer system 4, an overlapping station 5, a support conveyor 55, a backing conveyor 6, a transferring conveyor 7 and an unloading conveyor 9.

The loader 1 can be configured to automatically load a first layer 10 into an input position of said plant I.

Furthermore, the loader 1 can be configured to load a second layer 11 in an input position at the input position of the first layer 10, for example, adjacent to the latter, so that the first 10 and second 11 layers are side by side.

The first layer 10 can be an external layer panel, for example, a wooden panel, or a semi-finished product comprising a preferably wooden base and further internal layers, for example, corrugated cardboard sheets.

The second layer 11, also said internal layer, is substantially a panel, for example with a rectangular section, which comprises a support surface and an upper surface. Said second layer 11 is preferably a sheet of corrugated paper or cardboard of the type used to form the internal layers of a multilayer panel.

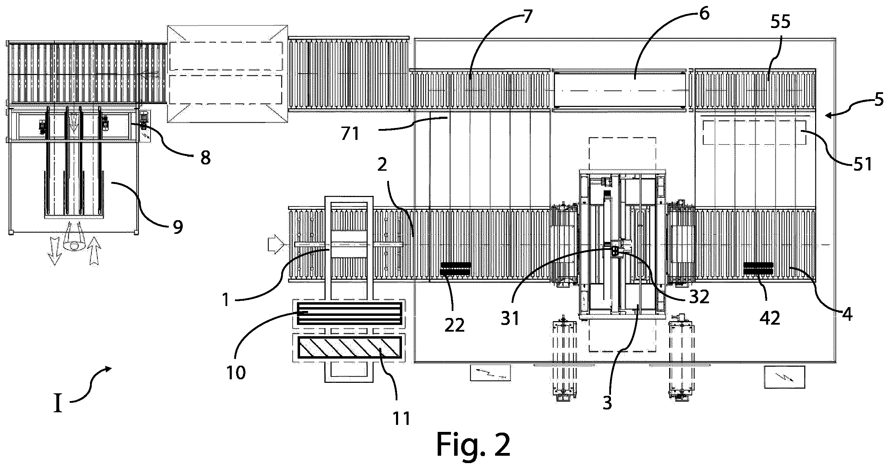

Referring to figure 2, the loader 1 can include at least one withdrawal station for maintaining a stack, from which to withdraw and load a first layer 10.

The stack of wood layers can be placed on the ground and lifted using a forklift or similar device.

The loader 1 may include a second picking station which is configured to maintain a stack of corrugated cardboard sheets from which to pick up and load the second layer. The second layer 1 stack can be placed on pallets or martyr panels.

The loader 1 can include sensors, for example, presence microswitches, to verify the correct positioning of the second layer on the loader.

The loader 1 may be configured to place an inner layer sheet 11 on an input conveyor 2.

In some embodiments, the stack of corrugated cardboard sheets and the stack of wooden panels can be easily inserted into the loader 1, through contact with lateral reference poles and abutment for the head, which guarantee their correct positioning.

In some embodiments, the loader 1 may be configured to separately place a first layer panel 10 and an inner layer sheet 11 on the input conveyor 2.

In some embodiments of the present invention, the loader 1 is configured to place an inner layer sheet 11 on the input conveyor 2, while the first layer 10 can be manually inserted on the input conveyor 2.

The input conveyor 2 is preferably a motorized roller conveyor, capable of receiving a sheet of corrugated cardboard and moving said sheet towards the operating station 3.

Referring to figure 2, the roller conveyor 2 can comprise one or more support belts 22 between its rollers, arranged on one side only, or for a portion of the width, a lane of a plurality of lanes, or around the rollers (in usually two rollers), to facilitate the passage of the corrugated paper sheet, ensuring correct handling and preventing the corrugated paper, which, as is known, is very flexible transversely to the waves, from blocking in the space between the rollers.

The aforementioned support belts 22 are arranged so as not to hinder the movement of translation grids, arranged below said input conveyor 2, to allow the lifting of the supported panels or layers and their transversal movement with respect to the direction of movement of the same input conveyor 2.

Furthermore, the input conveyor 2 is configured to transport said first 10 and second layers 11 from the input position to the operating station 3.

Furthermore, the system I can comprise a separator, to separate the input conveyor 2 into two portions or lanes used for transporting the first 10 and the second 11 layers respectively at least in part of the journey from the input position to the operating station 3.

The operating station 3 is capable of applying an adhesive material, for example, an epoxy resin or a combination of a resin and a consolidant, or hardener, on at least one surface of the first layer 10 and/or on a surface of the second layer 11.

In this way, the first 10 and the second 11 layers can be glued together.

The operating station 3 can comprise a sprayer, for example comprising a plurality of guns and related drive circuits, for applying the adhesive material.

The plurality of guns can be installed on a plurality of arms, so that at least one gun 31 is used for spraying adhesive material on the first layer and at least one gun 32 is used for spraying adhesive material on the second layer.

Consequently, at least two actuating circuits can be present in said operating station 3.

The application of the adhesive material can take place in different weights on the two layers due to the material difference.

The sprayer can comprise pressure regulators on at least one of the two gun drive circuits to determine the quantities of resin to be applied to at least one of said first and second layers.

In some alternative embodiments, in which it is not necessary to apply the adhesive material in different weights between the two layers, the sprayer can include a single gun and a single drive circuit.

The operating station 3 can further comprise a mixing head for mixing the epoxy resin with the consolidant and/or a catalyst, preferably installed on a support arm of the operating station 3 at a predetermined distance from the layers, to prevent the mixture adhesive clogs the circuits and nozzles.

Furthermore, the presence of a catalyst can ensure that the mixture occurs more quickly and therefore facilitate the workability time of the resin.

Additionally, the spray guns may be, in some embodiments, airless guns.

Furthermore, the operating station 3 is configured to release, once the resin has been applied to each of the two layers, the first and second layers following the same movement direction as the input conveyor 2, and to push them towards the first delivery system. transfer 4.

The first transfer system 4 is configured to transfer the second layer 11 from the operating station 3 to an overlapping station 5 and the first layer 10 from said operating station 3 to a support conveyor 55 adjacent to the overlapping station 5.

The transfer system 4 is preferably a system whose movement, in the embodiment shown, is substantially perpendicular to the advancement direction of the layers, or perpendicular to the line that connects the loader 1, the input conveyor 2, and the operating station 3.

Referring to figure 2, similarly to what is described for the input conveyor 2, the transfer system 4 can include one or more support belts 42.

The support belts 42 are arranged so as not to hinder the movement of translation grids, arranged below said transfer system 4 to allow the lifting of the supported panels or layers and their transversal movement with respect to the movement direction of the transfer system 4.

The transfer system 4 can include a stop, against which the wooden panel is placed before being transferred to the overlapping station 5. Furthermore, said transfer system 4 can also comprise a sensor (not shown in the figure) to block the cardboard layer at the same level or position as the panel. In this way, the cardboard layer is prevented from coming into contact and being bent or deformed.

The overlapping station 5 is configured to flip the second layer 11 onto the first layer 10 so that the surfaces on which the adhesive material has been applied are in mutual contact to form a multilayer panel.

In particular, the overlapping station 5 is configured to overturn the internal layer 11 so that the support surface faces upwards and the upper surface faces downwards facing the upper surface of the first layer 10.

Consequently, the two upper surfaces of said first and second layers to which the resin or other adhesive material has been applied can be glued together.

The overlapping station 5 can comprise at least one end-of-stroke sensor to ensure the correct positioning of the corrugated cardboard sheet.

In particular, some embodiments provide at least two end-of-stroke sensors for positioning along the two main dimensions of the corrugated sheet.

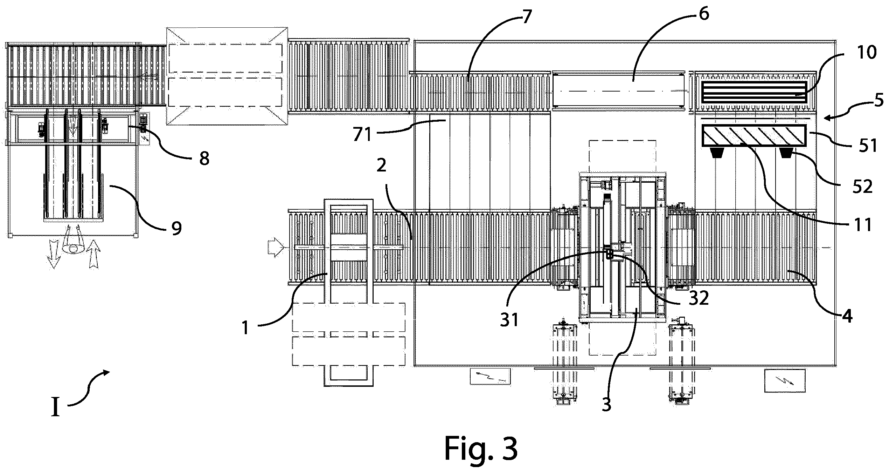

Referring to figure 3, the overlapping station 5 comprises a tilter 51, which is configured to automatically perform the tilting described above. In particular, the tilter 51 comprises at least one suction cup, or other support mechanism 52, to support the support surface of the second panel or layer 11.

In some embodiments, said tilter 51 may comprise grippers capable of rotating in a horizontal plane, or panel manipulators, liftable elements, or suction cups that secure the panel while the panel is rotated.

Further support mechanisms may comprise belts and/or parallel bars to support the second layer 11, possibly also in combination with the suction cup system.

The tilter 51 is configured to overturn the second layer by 180°, for example by means of one or more robotic arms, so that the upper surface of the second layer, overturned, i.e. facing downwards, is in correspondence with the upper surface of the first layer and kept suspended and elevated at a predetermined distance from the first layer by means of said at least one suction cup.

In particular, some embodiments of the tilter 51 provide two suction cups near two opposite ends of the support surface of the second layer to ensure that, after the tipping, said support or base surface of the second layer remains parallel to the support conveyor 55.

Furthermore, some embodiments can comprise four suction cups, for example, arranged at the corners of the support surface of the second layer.

Additionally, said at least one suction cup can be connected to one or more robotic arms to ensure stability during the overturning step.

Furthermore, said one or more arms can assume at least a position for receiving the second layer and a position for overturning the same.

Preferably, the tilter 51 may comprise six robotic arms, each of which may comprise two suction cups.

Also, the tilter 51 comprises at least one actuator, preferably pneumatic, to keep the second layer in correspondence with the first layer.

Furthermore, according to some embodiments, the tilter 51 is also able to translate toward the support station 55. In this way, particularly in the case in which the resin is applied on a surface of the first 10 or the second 11 layer, the tilter 51 can push the second layer 11 onto the first layer 10.

Therefore, pushing without overturning the second layer 11 can allow contact between the lower, dry surface of one layer, for example, the second layer 11, and the upper, wet surface of the other layer, for example, the first layer 10, to which the resin was applied.

The support conveyor 55 is configured to host the first layer 10 and to transport, after the overturning of the second layer 11 onto the first layer 10, the resulting multilayer panel, from an area adjacent to the overlapping station to a support conveyor 6, substantially parallel to said support conveyor 55. The support conveyor 6 is configured to support the multilayer panel and can comprise a belt or a roller conveyor.

Since the support surface of the multilayer panel corresponds to the support surface of the wooden layer, which is more rigid than the internal layer, the support conveyor 6 can have a pitch greater than the pitch of the input conveyor 2.

The transferring conveyor 7 is substantially parallel to said support conveyor 6, and is configured to transfer the multilayer panel from the support conveyor 6 to a press 8 for pressing when the panel is ready to be finalized.

The transferring conveyor 7, therefore, comprises a second transfer system substantially parallel to the movement direction of the support conveyor 55.

Furthermore, the transferring conveyor 7 can comprise a connecting bridge 71 to transport said partial or semi-finished multilayer panel to the input position.

In some embodiments, the absence of the connecting bridge 71 can be made up for by the action of an operator who manually evacuates the semi-finished product from the transferring conveyor 7 and positions it near the loader 1 or the input conveyor 2 in correspondence with a further corrugated cardboard sheet.

The press 8 can also be included in the system I, which comprises the unloading conveyor 9 for removing the multilayer panel when said panel has been completed.

The unloading conveyor 9 is preferably a roller belt and allows the produced panels to be evacuated from the press 8 and manually placed on racks for cooling.

Furthermore, system I may comprise a ventilation system.

The operation of the system I described above is as follows.

The loader 1 can place an inner layer sheet 11 and automatically load it into an input position of the plant I.

When the inner layer sheet 11 is loaded, a first layer 10 can be manually loaded at the inner layer 11 (second layer), for example in one of two lanes of the input conveyor 2.

In some embodiments of the present invention, the magazine 1 can load the first 10 and the second 11 layers at the input position.

By means of the input conveyor 2, the first 10 and second 11 layers are moved from the input position to the operating station 3 where an adhesive material is applied to the layers.

In the operating station 3 an adhesive material is applied on at least one surface of the first layer 10 and/or on a surface of the second layer 11 to be combined with said first layer 10.

The application of the adhesive material can be done by spraying, for example, using one or more airless guns.

In particular, spraying preferably takes place from above, to apply the adhesive material to the upper surface of the first 10 and second 11 layers. This application can take place with different weights of adhesive material since the two layers can comprise different materials.

Once the adhesive material has been applied to one or both layers, the second layer 11 is transferred from the operating station 3 to the overlapping station 5 and the first layer 10 from said operating station 3 to the support conveyor 55 adjacent to said overlapping station 5.

As can be seen from figure 3, the fact of positioning the first layer 10 adjacent to the overlapping station 5 allows that, when the two layers are overlapped, for example, when the second layer 11 is overturned using the tilter, said second layer is in such a position to be glued to the first layer 10.

In particular, the second layer 11 arrives at the tilter, for example, in correspondence with a retractable stop of the tilter.

The second layer 11 is therefore held in position by a plurality of rear stops, for example by means of suction cups in correspondence with the support surface of the second layer, and can be lifted by implementing one or more robotic arms and overturned over the first layer, for example a wooden panel.

The possible presence of a retractable rear stop allows the overlapping station to contain the cardboard laterally while gripping the suction cups that connect to the support surface of the second layer.

When the first and second layers are facing each other, in the overlapping station 5, at least one pneumatic head actuator pushes the second layer towards the first layer. In this way, the upper surface of the second layer 11, overturned, comes into contact with the upper surface of the first layer 10. Preferably, the wooden panel (first layer) can be aligned, for example, by means of belts, which hold it in combination with a retractable lateral guide.

Furthermore, the cardboard (second layer), before being placed side by side, can be lifted by the belts from various support surfaces, to support it longitudinally in a planar manner.

Following the overturning, the combination of the first and second layers is transported from the overlapping station 5 to a support conveyor 6 to support said multilayer panel.

At this point, the multilayer panel can be transferred from the support conveyor 6 to a press 8, in case the panel is considered ready to be finalized.

For example, following an operator's evaluation, it can be decided whether to press said multilayer panel using said press 8 or whether to use the semi-finished product obtained in a new production process.

Specifically, said semi-finished product can be used as a further external layer 11 for the production of a multilayer panel to be loaded into the input position of the plant and to be combined with a further internal layer.

In some embodiments of the plant, which is the object of the present invention, which contemplate the presence of a bridge 71 connecting the transferring conveyor 7 and the input conveyor 2, the recirculation of the semi-finished multilayer panel can take place in a semi-automatic manner, for example, the operator evaluates whether the panel must be transported to the press 8 or to the input conveyor 2 to add a new layer to the panel.

Furthermore, since the presence of the connecting bridge 71 means that the plant I is realized in a ring, in which the semi-finished product exiting the transferring conveyor 7 can enter the input conveyor 2, the movement speeds of at least the internal layer by means of the input conveyor 2, the application of the adhesive material on the two layers and their movement by the first transport system 4 is slower than the movement of the semi-finished multilayer panel by the support conveyor 55 and the transferring conveyor 7.

This speed difference allows the semi-finished multilayer panel to return to the input conveyor 2 in less time than that required to transport a pair of first 10 and/or second 11 layers from the input conveyor 2 to the overlapping station 3.

Therefore, the plant I may be capable of machining at least two pairs of layers in parallel.

In the event that the panel is considered ready to be finalized and is pressed, following pressing, the finalized multilayer panel is evacuated from the plant and can be, for example, placed on a cooling rack.

In some embodiments of the system in which the tilter 51 is also able to translate towards the support station 55, it may be convenient to apply a resin on a surface of the first layer 10 and not on a surface of the second layer 11, or vice versa. In fact, in the case of translation, the lower surface of the second layer 11, to which the resin has not been applied, can rest on the upper surface of the first layer 10, wetted by the resin that has been applied there.

The tilter 51 can, therefore, push the second layer 11 onto the first layer 10 to allow contact between the lower, dry surface of the second layer 11 and the upper, wet surface of the first layer 10, to which the resin has been applied.

Therefore, overlapping the second layer 11 onto the first layer 10 may comprise overturning and/or pushing one layer onto the other such that the two layers are in contact, or equivalently share a contact surface, to form a multi-layer panel.

### Advantages

The present invention allows the automation of the production process of multilayer panels.

Furthermore, the present invention provides an automatic flipping system for flipping a layer to facilitate the coupling with another layer to produce a multilayer panel.

Furthermore, the present invention provides a plant for the production of multilayer panels capable of reducing the working times and interventions of an operator.

Furthermore, the methods of the present invention allow the automatic production of a multilayer panel.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Plant (I) for the production of multilayer panels comprising:
an operating station (3) capable of applying an adhesive material on at least a surface of a first layer (10) and/or at least one surface of a second layer (11), to be combined with said first layer (10);
a support conveyor (55), arranged downstream of said operating station (3), intended to receive said first layer (10);
an overlapping station (5) arranged adjacent to said support conveyor (55) and intended to receive said second layer (11) from said operating station (3),
wherein said overlapping station (5) is configured to overlap said second layer (11) on said first layer (10), so that said at least one surface of said first layer (10) is in contact with said at least one surface of said second layer (11) to form a multilayer panel.

2. Plant (I) according to the preceding claim, **characterized**
**in that** said overlapping station (5) comprises an automatic tilter (51) for tilting said second layer (11) onto said first layer (10) when said first layer (10) is on said support conveyor (55), said tilter (51) having
at least one actuator for maintaining said second layer (11) at said first layer (10); and
a support mechanism (52), configured to lift said second layer (11) to a predetermined height and support it substantially parallel to said support conveyor (55).

3. Plant (I) according to claim 1 or 2, **characterized**
**in that** it comprises a transferring system (4) for transferring said second layer (11) from said operating station (3) to said overlapping station (5).

4. Plant (I) according to any one of the preceding claims, **characterized**
**in that** it comprises a support conveyor (6), arranged substantially parallel to said support conveyor (55), to support said multilayer panel, and
**in that** said support conveyor (55) is configured to transport said multilayer panel from said overlapping station (5) to said support conveyor (6).

5. Plant (I) according to any one of the preceding claims, which further comprises
a loader (1) for automatically loading said first layer (10) and/or said second layer (11) and
an input conveyor (2) for transporting said first layer (10) and/or said second layer (11) from said loader (1) entering said operating station (3).

6. Plant (I) according to any one of the preceding claims, **characterized**
**in that** it comprises
a press (8) for pressing said multilayer panel,
a transferring conveyor (7), arranged downstream of said support conveyor (55), and configured to transfer said multilayer panel from said supporting conveyor (6) to said press (8), and
**in that** in that said transferring conveyor (7) is arranged downstream of said supporting conveyor (6),
wherein preferably said transferring conveyor (7) is arranged downstream of said supporting conveyor (6).

7. Plant (I) according to any one of the preceding claims, **characterized in that** it comprises an unloading conveyor (9) for removing said multilayer panel when said panel has been pressed.

8. Plant (I) according to the preceding claim, **characterized**
**in that** it comprises one or more devices for applying said adhesive material on said surfaces of said first and/or second layer;
**in that** it comprises at least one first device (31) of said one or more application devices is configured to spray adhesive material to said first layer (10), and
**in that** at least a second device (32) of said one or more application devices is configured to spray adhesive material to said second layer (11).

9. Plant (I) according to any one of the preceding claims, **characterized in that** said transferring conveyor (7) comprises a connection bridge (71) for transporting said multilayer panel to an input position at said material input conveyor (2).

10. Plant (I) according to any one of claims 2-16, wherein said tilter (51) is capable of translating towards the support station (55).

11. Overlapping station (5) for a plant (I) for the production of multilayer panels according to any one of the preceding claims, comprising
an automatic tilter (51) configured to tilt said second layer (11) onto said first layer (10) when said first layer (10) is on said support conveyor (55), wherein said tilter (51) comprises:
at least one actuator for maintaining said second layer (11) at said first layer (10); and
a support mechanism (52) configured to lift said second layer (11) to a predetermined height and support it substantially parallel to said transferring system (4).

12. Method of producing multilayer panels by means of a plant (I) according to any one of claims 1-10, which comprises the following steps:
a. automatically loading a first and/or a second layer in an input position of said plant (I);
b. transporting said first layer (10) and second layer (11) from said input position to said operating station (3) for applying an adhesive material;
c. applying an adhesive material on at least one surface of said first layer (10) and/or on a surface of a second layer (11) to be combined with said first layer;
d. transferring said second layer (11) from said operating station (3) to an overlapping station (5) and said first layer (10) from said operating station to a support conveyor (55) adjacent to said overlapping station (5); and
e. overlapping said second layer (11) on said first layer (10), in such a way that said at least one surface of said first layer (10) is in contact with said at least one surface of said second layer (11) to form a multilayer panel.

13. Method according to the preceding claim, **characterized in that** it comprises the following further steps:
f. transporting said multilayer panel from said overlapping station (5) to a support conveyor (6), which supports said multilayer panel;
g. transferring said multilayer panel from said support conveyor (6) to a press (8);
h. pressing said multilayer panel by means of said press (8); and
i. removing said finalized multilayer panel from said plant.

14. Method according to the preceding claim, **characterized in that** it comprises the following further steps:
j. following step (f), transporting said multilayer panel obtained through step (e) from said support conveyor (6) to said entrance position; and
k. repeating steps a-f, before carrying out steps g-i, a number of times equal to the number of layers desired of said multilayer panel.

15. Method for producing multilayer panels by means of a plant (I) according to any one of claims 1-10, which comprises steps a-d, said method being **characterized in that** it comprises the following steps:
a. automatically loading a first and/or a second layer in an input position of said plant (I);
b. transporting said first layer (10) and second layer (11) from said input position to said operating station (3) for applying an adhesive material;
c. applying an adhesive material on at least one surface of said first layer (10) and/or on a surface of a second layer (11) to be combined with said first layer;
d. transferring said second layer (11) from said operating station (3) to an overlapping station (5) and said first layer (10) from said operating station to a support conveyor (55) adjacent to said overlapping station (5);
l. pushing said second layer (11) onto said first layer (10) such that said at least one surface of said first layer (10) is in contact with said at least one surface of said second layer (11) to form a multilayer panel;
f. transporting said multilayer panel from said overlapping station (5) to a support conveyor (6), which supports said multilayer panel;
g. transferring said multilayer panel from said support conveyor (6) to a press (8);
h. pressing said multilayer panel by means of said press (8); and
i. removing said finalized multilayer panel from said plant.
